# EUROPÄISCHE PATENTSCHRIFT

(11) **EP 0 446 882 B1**
(45) Veröffentlichungstag und Bekanntmachung des Hinweises auf die Patenterteilung: **20.09.1995**
(21) Anmeldenummer: 91103793.5
(22) Anmeldetag: 13.03.1991
(51) Int. Cl.: G03B 17/08, G08B 15/00

(54) **Schutzgehäuse für optische Geräte**
Protection housing for optical apparatus
Boîtier de protection pour appareils optiques

(30) Priorität: 15.03.1990 DE 4008338
(43) Veröffentlichungstag der Anmeldung: 18.09.1991
(73) Patentinhaber: VIDEOR TECHNICAL E. HARTIG GMBH, 63319 Rödermark (DE)
(72) Erfinder: Bernhardt, Rainer, W-6365 Rosbach - 1 (DE); Waldschmitt, Reiner, W-6236 Eschborn - 2 (DE)
(74) Vertreter: Zapfe, Hans, Dipl.-Ing.

(56) Entgegenhaltungen:
- EP-A- 0 285 922
- DE-U- 8 600 747

## Beschreibung

Die Erfindung betrifft ein Schutzgehäuse für optische Geräte, insbesondere ein Wetterschutzgehäuse für Video-Kameras von Überwachungsanlagen, mit einem rohrförmigen Gehäusemantel, mit je einer an dessen jeweiligem Ende abgedichtet angesetzten Frontwand und Rückwand, mit einem innerhalb des Gehäusemantels angeordneten, mit der Rückwand starr verbundenen Geräteträger und einem außerhalb des Gehäusemantels an dessen Unterseite befindlichen Gehäuseträger für die Befestigung des Schutzgehäuses auf einem ortsfesten Lager, wobei die elektrischen Anschlüsse durch die Rückwand hindurchgeführt sind und der Gehäusemantel von der Rückwand und dem Geräteträger abziehbar ist.

Ein derartiges Schutzgehäuse ist durch die Firmendruckschrift "VIDEO-Security" der Anmelderin, Ausgabe 3/89, Seiten 8/9 bekannt. Schutzgehäuse dieser Art werden nach dem Anbringen vor Ort mittels einer Wandkonsole, einer Deckenaufhängung oder dergleichen mit den dafür vorgesehenen optischen Geräten und den zugehörigen elektrischen Einrichtungen bestückt. Bei Wartungs- oder gelegentlich vorkommenden Reparaturarbeiten müssen die Einbaugeräte gelegentlich auch wieder demontiert werden. Auch nachträgliche Umrüstungen mit anderen optischen Geräten sind keineswegs die Ausnahme. Da derartige Schutzgehäuse bevorzugt für den Einbau von Video-Kameras vorgesehen sind, soll die Problematik anhand einer solchen Video-Kamera aufgezeigt werden:

Bei der Montage befindet sich der Gehäuseträger, der die Form einer Schiene oder eines Schlittens hat, auf einem ortsfest angebrachten Gelenkkopf, der nachfolgend als Lager bezeichnet wird. Gegenüber diesem Lager ist der Gehäuseträger in Längsrichtung verschiebbar, und er kann um eine waagrechte Achse geneigt werden, wobei eine Arretierung in der jeweils gewählten Stellung erfolgt.

Bei der eingangs beschriebenen bekannten Lösung ist nun die Gehäuserückwand über eine gleichfalls waagrechte Gelenkachse schwenkbar mit dem Gehäuseträger verbunden, und an dieser Gehäuserückwand ist wiederum starr der Geräteträger befestigt. In montiertem Zustand verlaufen Geräte- und Gehäuseträger mit ihren längsten Achsen parallel zueinander, wobei sich in dem Zwischenraum der unterste Teil des Gehäusemantels befindet, der - um seine Aufgabe erfüllen zu können - als geschlossenes Rohr ausgebildet ist.

Der Gehäusemantel kann dabei beliebige Querschnittsformen haben, beispielsweise quadratisch, rechteckig, achteckig oder rund.

Zum Zwecke einer Demontage läßt sich der Gehäusemantel aus dem Spalt zwischen Geräte- und Gehäuseträger nach vorn herausziehen, und zwar bis zum Anschlag an eine Schwenklagerung. An dieser Schwenklagerung bleibt der Gehäusemantel alsdann hängen und richtet sich unter der Wirkung der Schwerkraft schräg nach unten aus, wobei eine Pendelbewegung möglich ist. Der Geräteträger läßt sich nun um die hintere Gelenkachse, die die Rückwand mit dem Gehäuseträger verbindet, nach oben verschwenken, wobei zwischen dem Geräteträger und dem Gehäuseträger eine V-förmige Stellung gebildet wird, die aber nicht stabil ist. Der Monteur muß nun die Video-Kamera von unten her durch den Geräteträger verschrauben, ein Vorgang, der wegen der Beweglichkeit der einzelnen Teile zueinander sehr schwierig auszuführen ist, zumal natürlich die Video-Kamera mit ihrer Achse genau auf die spätere Lage der Gehäuseachse auszurichten und in dieser Stellung auch zu fixieren ist, und zwar insbesondere gegen ein Verdrehen. Zusätzlich müssen alsdann auch die elektrischen bzw. elektronischen Geräteteile auf dem Geräteträger und/oder an der Rückwand befestigt werden, und schließlich muß auch eine Verdrahtung und die Verbindung mit den äußeren Leitungen erfolgen. Diese Manipulationen sind durch eine einzige Person nur sehr schwer auszuführen.

Hinzu kommt eine weitere Problematik: Sowohl die Video-Kameras, als auch die zugehörigen Objektive liegen in unterschiedlichen Bauformen und Größen vor. Objektive haben je nach Lichtstärke, Brennweite und Bauweise sehr unterschiedliche Durchmesser, wobei insbesondere Weitwinkel-Objektive großer Lichtstärke einen Durchmesser aufweisen, der die Abmessungen moderner Video-Kameras übersteigt. Eine große Lichtstärke ist deswegen erforderlich, weil derartige Kameras auch bei schlechter Beleuchtung voll funktionsfähig sein müssen.

Um dabei eine Vignettierung zu vermeiden, muß die optische Achse des Objektivs möglichst genau auf den Mittelpunkt des Gehäusefensters ausgerichtet sein, ausreichende Größe dieses Fensters natürlich vorausgesetzt. Aus den vorstehend genannten Gründen ist es erforderlich, die Kamera auf dem Geräteträger in einer vorgegebenen Höhe anzubringen, die ja je nach dem gewählten Kamera- und Objektivtyp verschieden sein kann. Man hat sich in der Vergangenheit hierbei so geholfen, daß man zwischen dem Kamerakörper und dem Geräteträger Zwischenlagen angeordnet hat, wobei natürlich wiederum eine Verdrehsicherung gegebenen sein mußte. Auch diese Forderung machte die Montage einer Video-Kamera schwierig und zeitraubend.

Durch das DE-GM 86 00 747 ist ein Schutzgehäuse bekannt, in dessen Hohlraum unter Verwendung eines Paares seitlicher Nuten ein Geräteträger in einer einzigen Höhenlage eingeschoben werden kann. Zum Ausgleich unterschiedlicher Abstände des Kamerabodens von dem Geräteträger müssen unterschiedlich dicke Beilagen verwendet werden, um bei unterschiedlichen Kamera- und Objektivtypen eine vorgegebene Höhe der Kameraachse im Gehäuse einstellen zu können.

Der Gehäuseträger wird durch ein integrales Bauteil des mit Nuten und Rippen versehenen Gehäusebodens gebildet. In die Nuten greift ein verhältnismäßig kurzes Kupplungsteil ein, das die Verbindung des Gehäuses mit einem Schwenklager herstellt. Geräteträger und Kupplungsteil sind nicht über die Gehäuserückwand miteinander verbunden und werden getrennt montiert. Insbesondere ist es nicht möglich, den Gehäusemantel von der Rückwand abzuziehen, während die Kamera mit der Rückwand und diese mit dem Lager bzw. einer Lagerkonsole verbunden bleibt.

Der Erfindung liegt daher die Aufgabe zugrunde, ein Schutzgehäuse der eingangs beschriebenen Gattung anzugeben, das die Montage und Justierung der einzubauenden optischen Geräte auch bei unterschiedlichen Geräteabmessungen erheblich vereinfacht, eine gefahrlose Montage auch in schwierigen Lagen ermöglicht und eine exakte Ausrichtung und Fixierung der optischen Achse des Gerätes auf die Gehäuseachse ermöglicht.

Die Lösung der gestellten Aufgabe erfolgt bei dem eingangs beschriebenen Schutzgehäuse erfindungsgemäß dadurch, daß der Geräteträger im Querschnitt als U-förmiger, nach oben offener Trog mit zwei parallelen Seitenwänden und einem die Seitenwände verbindenden Joch ausgebildet ist und daß die Seitenwände auf ihren Innenflächen mit jeweils mehreren, zur Gehäuseachse parallelen Nuten zum Einschieben mindestens einer Geräte-Trägerplatte in wählbaren Höhenlagen versehen ist.

Eine wichtige Voraussetzung ist hierbei, daß der Geräteträger fest mit der Rückwand verbunden ist. Wenn die Rückwand zusätzlich gegenüber dem ortsfesten Lager fixiert ist, so hat auch der Geräteträger eine unverrückbare Lage, so daß der Monteur das optische Gerät anbringen kann, ohne daß dies hierbei unkontrollierte Bewegungen ausführen kann.

Durch die erfindungsgemäße Ausbildung des Geräteträgers kann das bereits auf der Geräte-Trägerplatte montierte optische Gerät jeweils in einer solchen Höhenlage von vorn in den Geräteträger eingeschoben werden, daß die optische Achse des Geräts zumindest sehr weitgehend mit der Gehäuseachse zusammenfällt. Hierbei läßt sich auch eine Sicherung des Geräts gegen ein Verdrehen auf der Trägerplatte zuverlässig erreichen. Es ist jetzt nicht mehr nötig, eine große Zahl unterschiedlicher Unterlegplatten für die Höhenjustierung des optischen Geräts auf dem Geräteträger mit sich zu führen.

Im einfachsten Fall kann die Geräte-Trägerplatte als ebene, von planparallelen Flächen begrenzte Platte ausgeführt werden. Um jedoch die Variationsbreite hinsichtlich der Wahl der Höhenlage des optischen Geräts noch weiter zu vergrößern, kann mit besonderem Vorteil die Geräte-Trägerplatte in ihren mittleren Bereich unter Bildung zweier paralleler Seitenwände gekröpft ausgebildet sein und an den freien Längskanten der Seitenwände zwei entgegengesetzt nach außen weisende Führungsrippen aufweisen, die in gegenüberliegenden Nuten des Geräteträgers einschiebbar sind.

Der Einsatz eines Geräteträgers mit Nuten in unterschiedlichen Höhenlagen ist besonders vorteilhaft in Verbindung mit der starren Koppelung von Geräteträger und Gehäuseträger über die Rückwand: Die zuverlässige Festlegung des optischen Geräts im Gehäuse erfolgt dann lediglich nach einer Vormontage von Gerät und Geräte-Trägerplatte sowie Einschieben der Trägerplatte in die dafür vorgesehenen Nuten.

Durch die weitere Ausgestaltung der Führungselemente zwischen Gehäusemantel und Gehäuseträger nach den Ansprüchen 2 und 3 wird eine verkantungsfreie Führung für das geradlinige Herausziehen des Gehäusemantels mit der angesetzten Frontwand ermöglicht.

Durch die weitere Ausgestaltung des Gehäuseträgers nach den Ansprüchen 4 bis 6 lassen sich die zu den Einbauteilen innerhalb des Schutzgehäuses führenden Leitungen auf der Gehäuseunterseite vollständig verdeckt unterbringen, wodurch nicht nur einer Sabotage vorgebeugt sondern auch das Aussehen erheblich gefördert wird.

Es ist dabei wiederum von besonderem Vorteil, wenn die Rückwand auf ihrer dem Gehäusemantel zugekehrten Seite einen Hohlraum aufweist, der als Verlängerung des Hohlraums des Gehäusemantels ausgebildet ist und auf seinen seitlichen Begrenzungswänden Nuten und Rippen aufweist, die mit den Nuten und Rippen des Geräteträgers fluchten.

Auf diese Weise ist es möglich, beispielsweise eine zweite Geräte-Trägerplatte im Gehäuse anzuordnen und bis in den Hohlraum der Rückwand hineinzuschieben, um an dieser Stelle beispielsweise Netzteile und andere Steuergeräte unterzubringen.

Weitere vorteilhafte Ausgestaltungen des Erfindungsgegenstandes ergeben sich aus den übrigen Unteransprüchen; ihre Vorteile sind in der Detailbeschreibung näher erläutert.

Ausführungsbeispiele des Erfindungsgegenstandes werden nachfolgend anhand der Figuren 1 bis 17 näher erläutert.

Es zeigen:
- Figur 1: einen vertikalen Axialschnitt durch ein Schutzgehäuse, das auf einer Wandkonsole befestigt ist,
- Figur 2: einen Querschnitt entlang der radialen Ebene II-II in Figur 1,
- Figur 3: einen Ausschnitt aus Figur 2,
- Figur 4: eine Draufsicht auf den Gehäuseträger,
- Figur 5: einen Schnitt durch den Gegenstand von Figur 4 entlang der Mittenachse,
- Figur 6: einen Schnitt durch den Gegenstand von Figur 5 entlang der Linie VI-VI,
- Figur 7: einen Querschnitt durch den Gegenstand von Figur 4 entlang der Linie VII-VII,
- Figur 8: einen vertikalen Axialschnitt durch die Rückwand des Gehäuses,
- Figur 9: eine Draufsicht auf den Gegenstand von Figur 8,
- Figur 10: eine Draufsicht auf die Innenseite der Rückwand nach Figur 8,
- Figur 11: eine Draufsicht auf die Rückseite der Rückwand nach Figur 8,
- Figur 12: eine Draufsicht auf eine ebene Geräte-Trägerplatte,
- Figur 13: einen Querschnitt auf eine gekröpft ausgebildete Geräte-Trägerplatte,
- Figur 14: einen vertikalen Axialschnitt durch ein Schutzgehäuse analog Figur 1 in vergrößertem Maßstab und mit weiteren Details,
- Figur 15: einen Draufsicht auf die Innenseite der Frontwand des Gehäuses,
- Figur 16: eine Draufsicht auf die Innenseite einer modifizierten Rückwand analog Figur 10, und
- Figur 17: einen vertikalen Axialschnitt analog Figur 8, jedoch durch den Gegenstand von Figur 16.

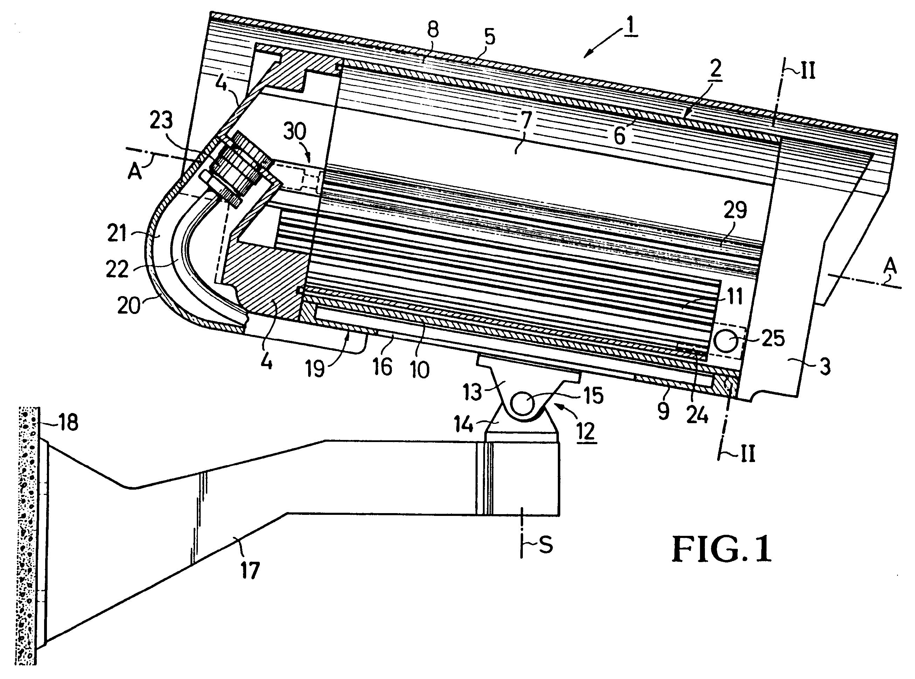

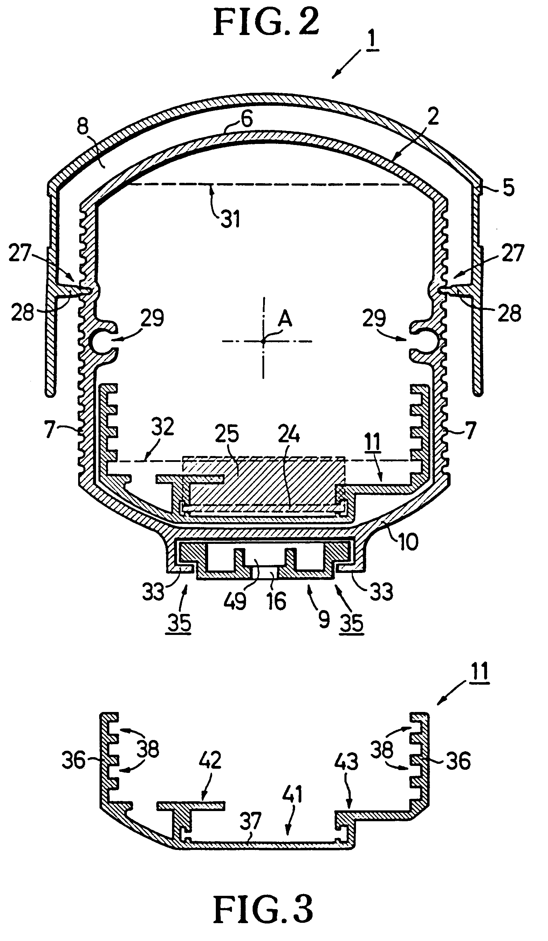

In Figur 1 ist ein Wetterschutzgehäuse für Video-Kameras gezeigt, das einen rohrförmigen Gehäusemantel 2 aufweist, der aus einem Abschnitt eines auf dem Umfang geschlossenen Leichtmetall-Strangprofils besteht. Der Querschnitt ist in Figur 2 dargestellt und wird im Zusammenhang damit noch näher erläutert.

Der Gehäusemantel 2 ist vorn und hinten durch eine Frontwand 3 und eine Rückwand 4 dicht verschlossen. Zum Schutzgehäuse gehört ferner ein Schutzdach 5, das den Gehäusemantel 2 auf seiner Oberseite 6 und auf dem größten Teil seiner beiden Seitenwände 7 unter Belassung eines Luftspalts 8 umgibt. Die Länge des Schutzdaches 5 ist dabei so gewählt, daß es sowohl über die Vorderseite der Frontwand 3 als auch über die Rückseite der Rückwand 4 übersteht.

Zum Schutzgehäuse gehört ferner ein Gehäuseträger 9, der anhand der Figuren 2 und 4 bis 7 noch im Einzelnen erläutert wird. Dieser Gehäuseträger ist in Figur 2 eng schraffiert dargestellt und starr mit der Rückwand 4 verbunden. Der Gehäuseträger 9 ist knapp unterhalb der Unterseite 10 des Gehäusemantels 2 angeordnet. Oberhalb dieser Unterseite befindet sich ein Geräteträger 11, der gleichfalls starr mit der Rückwand 4 verbunden und in Figur 2 gleichfalls eng schraffiert dargestellt ist. Einzelheiten werden anhand der Figur 3 noch näher erläutert.

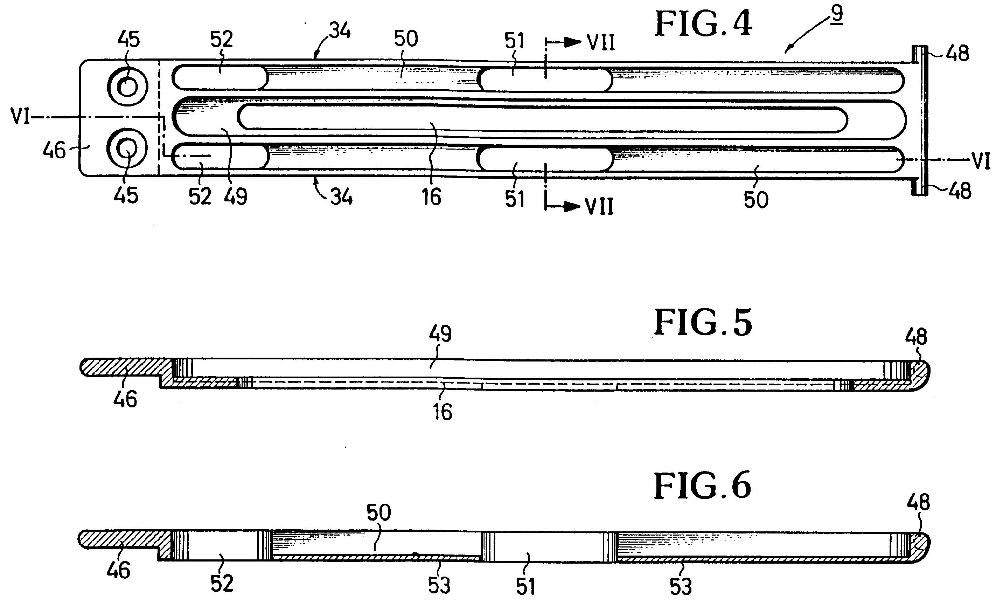

Es ist aus den Figuren 1 und 2 zu ersehen, daß zwischen dem Gehäuseträger 9 und dem Geräteträger 11 ein Spalt gebildet wird, in dem sich - mit Spiel - die Unterseite 10 des Gehäusemantels 2 befindet. Aufgrund der starren Verbindung sowohl des Gehäuseträgers 9 als auch des Geräteträgers 11 mit der Rückwand 4 hat dieser Spalt stets die gleichen Abmessungen, und aus ihm kann der Gehäusemantel 2 bis zum Anschlag an sogenannten Fangelementen herausgezogen werden, auf die im Zusammenhang mit Figur 4 noch näher eingegangen werden wird.

Gemäß Figur 1 ist das Schutzgehäuse 1 auf einem Lager 12 befestigt, das aus zwei Lagerböcken 13 und 14 besteht, die durch eine Neigeachse 15 miteinander verbunden sind. Der Gehäuseträger 9 besitzt einen mittigen Längsschlitz 16 und ist dadurch in Richtung der Gehäuseachse A-A auf dem Lagerbock 13 verschiebbar. Die Festlegung erfolgt über nicht dargestellte Spannschrauben und wird in der Weise getroffen, daß sich die Neigeachse 15 möglichst genau unter dem Schwerpunkt des vollständig bestückten Schutzgehäuses befindet.

Der untere Lagerbock 14 ist um eine Schwenkachse S drehbar an einer Wandkonsole 17 befestigt, die mit einer Wand 18 verschraubt ist.

Die erforderlichen elektrischen Leitungen verlaufen in der Wandkonsole 17 sowie in nicht näher dargestellten Hohlräumen in den Lagerböcken 13 und 14 sowie auf eine weiter unten noch näher beschriebene Weise auch innerhalb des Gehäuseträgers 9. Auf das hintere Ende der Unterseite 19 des Gehäuseträgers 9 ist das vordere Ende eines Deckelteils 20 aufgesetzt, das in der senkrechten Schnittebene gemäß Figur 1 V-förmig ausgebildet, aber im Bereich seines Scheitels gut abgerundet ist. Dieses Deckelteil 20 erstreckt sich mit seinem anderen Schenkel bis zur Rückwand 4 und schließt dabei einen Kabelkanal 21 ein, in dem sich die erforderlichen elektrischen Anschlußleitungen befinden, die hier durch ein Vielfachkabel 22 dargestellt sind. Dieses Vielfachkabel 22 wird durch eine Stopfbuchsverschraubung 23 durch die Rückwand 4 hindurchgeführt. Der seitliche Abschluß des Kabelkanals 21 wird dadurch bewirkt, daß der Deckelteil 20 in sämtlichen Schnittebenen, die zur Schnittebene gemäß Figur 1 senkrecht verlaufen, U-förmig ausgebildet ist und lückenlos an die Rückwand 4 anstößt. Auf diese Weise ist das Vielfachkabel 22, von dem nur ein Teilabschnitt sichtbar dargestellt ist, auf seiner gesamten Länge gegen Sabotage und Witterungseinflüsse geschützt. Der weitere Verlauf dieses Vielfachkabels im Innern des Schutzgehäuses ist der Einfachheit halber nicht dargestellt.

Die Neigeachse 15 und die Schwenkachse S bilden ein kardanisches Gelenk, mit dem die Gehäuseachse A-A und damit die Achse des eingebauten optischen Geräts nahezu beliebig auf ein zu überwachendes Objekt einstellbar sind.

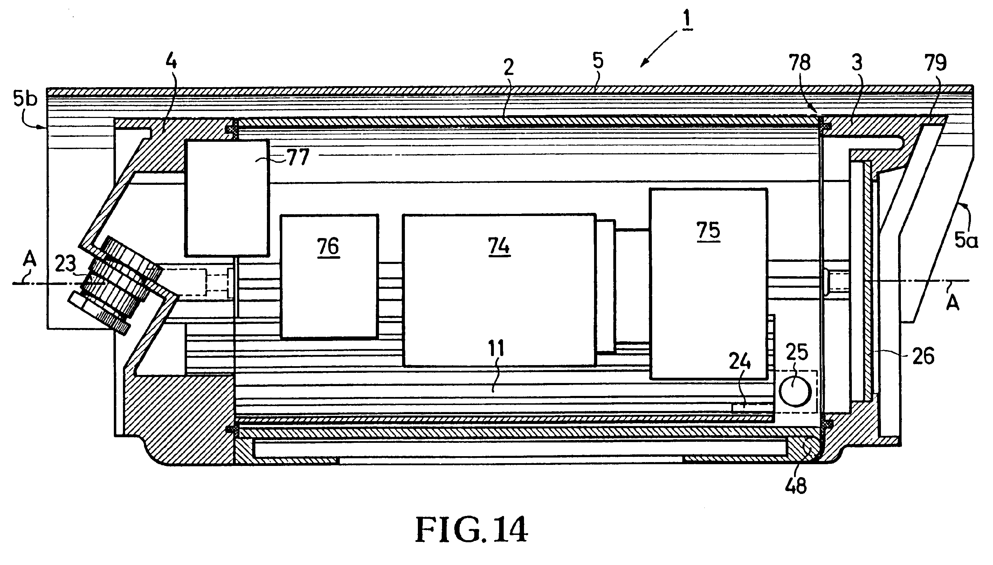

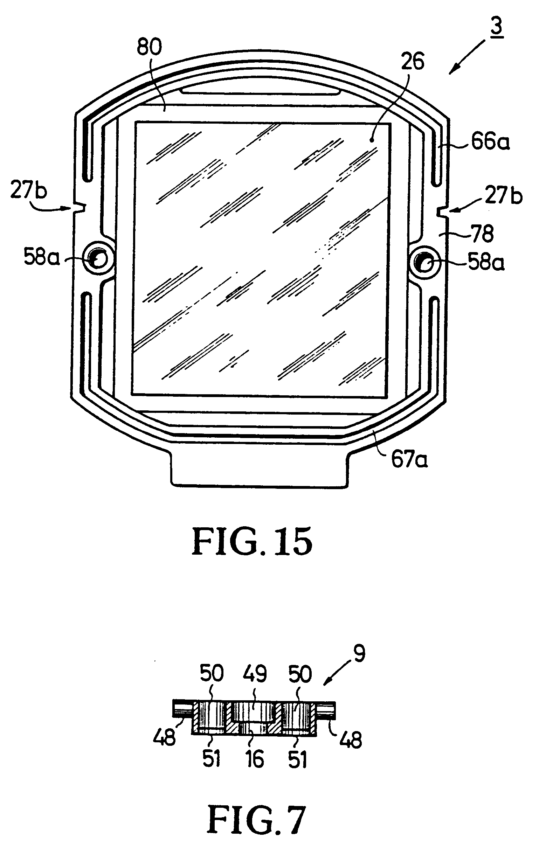

In das vordere freie Ende des Geräteträgers 11 ist mittels einer Trägerplatte 24 ein Heizkörper 25 eingesetzt, der zur Beheizung eines Gehäusefensters 26 dient, das in den Figuren 14 und 15 dargestellt ist.

Gemäß Figur 2 sind die Außenflächen der Seitenwände 7 mit nicht näher bezeichneten Rippen versehen, außerdem mit zwei besonders ausgeprägten Nuten 27, die genau gegenüberliegend angeordnet sind und in die komplementäre Rippen 28 einschiebbar sind, die auf der Innenseite des Schutzdaches 5 angeformt sind.

Auf den Innenflächen tragen die beiden Seitenwände 7 sogenannte Schraubkanäle 29, die zur Befestigung von Frontwand 3 und Rückwand 4 dienen. Die Art der Befestigung ist in Figur 1 an der Stelle 30 angedeutet.

In Figur 2 ist durch gestrichelte Linien 31 und 32 dasjenige Profil angedeutet, in dem sich die optischen Geräte befinden können, wobei die optische Achse jeweils soweit wie irgend möglich mit der Gehäuseachse A übereinstimmen muß.

Aus Figur 2 ist weiterhin zu erkennen, daß der Gehäusemantel 2 an seiner Unterseite 10 mit zwei L-förmigen Längsrippen 33 versehen ist, deren freie Schenkel aufeinander zu gerichtet sind und den Gehäuseträger 9 an seinen langen parallelen Seitenkanten 34 (Figur 4) unter Bildung schwalbenschwanzförmiger Führungen 35 umgreifen.

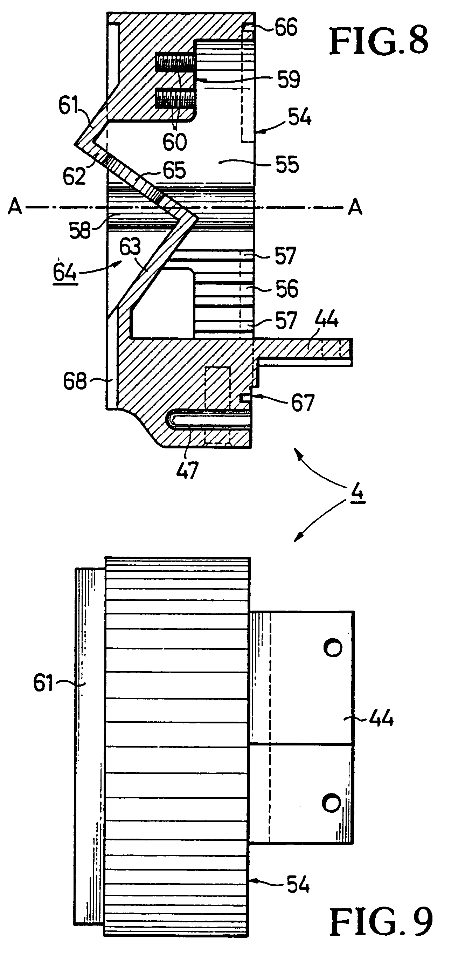

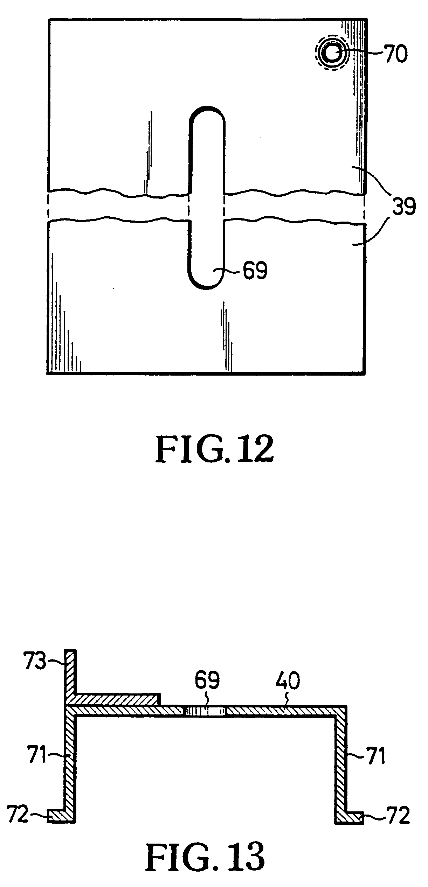

Der Geräteträger 11 ist gleichfalls als Abschnitt eines stranggepreßten Leichtmetall-Profils ausgebildet und besitzt einen Querschnitt in Form eines nach oben offenen "U" mit zwei parallelen Seitenwänden 36, die an ihren Unterkanten durch ein Joch 37 verbunden sind. Auf ihren Innenflächen sind die Seitenwände 36 jeweils mit mehreren Nuten 38 versehen, die zum Einschieben mindestens einer Geräte-Trägerplatte 39 oder 40 dienen, wie sie beispielhaft in den Figuren 12 und 13 dargestellt sind. Aus Figur 3 ist noch zu entnehmen, daß der Geräteträger 11 im Bereich seines Jochs 37 eine nach oben offene Einschubführung 41 aufweist, die zum kraftschlüssigen Einsetzen der Trägerplatte 24 des Heizkörpers 25 dient, wie dies in den Figuren 1 und 2 schematisch dargestellt ist. Das Joch 37 besitzt ferner zwei Auflageflächen 42 und 43, mit denen der Geräteträger 11 mit einem entsprechend profilierten Fortsatz 44 der Rückwand 4 verschraubt ist (Figuren 8, 9 und 10).

Gemäß den Figuren 4 bis 7 ist der Gehäuseträger 9 als Gußteil aus einer Leichtmetall-Legierung ausgeführt. Er ist in der Draufsicht im wesentlichen langgestreckt rechteckig ausgeführt und hat die Form einer Schiene, deren Profil im Querschnitt in Figur 7 dargestellt ist. Am hinteren Ende weist der Geräteträger 11 Bohrungen 45 auf, die sich in einem Fortsatz 46 befinden, mit dem der Geräteträger 11 in eine komplementäre Ausnehmung 47 in der Innenseite der Rückwand 4 einsetzbar und dort starr verschraubbar ist. An seinem entgegengesetzten, freien Ende besitzt der Geräteträger 11 Fangelemente 48, die als koaxiale Zylinderzapfen ausgeführt sind und mit entsprechenden komplementären Fangelementen am hinteren Ende der Führungen 35 im Gehäusemantel 2 in der Weise zusammenwirken, daß der Gehäusemantel 2 am Ende seines Ausziehweges an den Fangelementen 48 anstößt und um diese herum nach unten schwenkbar ist. Hierbei ist zu beachten, daß die Schnittebene II-II gemäß den Figuren 1 und 2 durch eben diese zapfenförmigen Fangelemente verläuft. Die hierzu komplementären Fangelemente des Gehäusemantels sind der Einfachheit halber nicht dargestellt, sie können aus Schrauben oder Bolzen bestehen, die in die von den L-förmigen Längsrippen umschlossenen Nuten hineinragen.

Wie aus den Figuren 4 und 5 hervorgeht, befindet sich im Gehäuseträger 9 im Bereich seiner mittleren Längsachse der anhand von Figur 1 bereits näher beschriebene Längsschlitz 16, der nach oben hin eine T-förmige Erweiterung 49 besitzt, die zur verdrehsicheren Führung eines Schraubenkopfes oder einer Mutter dient. Beiderseits dieses Längsschlitzes ist je ein Längskanal 50 angeordnet, der zur Unterbringung des bereits beschriebenen Vielfachkabels 22 und gegebenenfalls eines weiteren Vielfachkabels dient. Die Längskanäle 50 weisen zwei nach unten gerichtete Öffnungen 51 und 52 auf, die zum Einführen bzw. Ausführen des bereits beschriebenen Vielfachkabels 22 dienen. Die beiden Öffnungen 51 befinden sich im Bereich des Lagerbocks 13, während sich die beiden anderen Öffnungen 52 im hinteren Bereich des Gehäuseträgers 9 befinden, in dem dieser von dem vorderen Ende des Deckelteils 20 überdeckt wird. In den übrigen Bereichen sind die Längskanäle 50 nach unten hin durch Wandelemente 53 verschlossen.

Die in den Figuren 8 bis 11 dargestellte Rückwand 4 ist als Gußteil ausgebildet und auf ihrer dem Gehäusemantel 2 zugekehrten Stirnseite 54 mit den Befestigungselementen für den Geräteträger 11 und für den Gehäuseträger 9 versehen, nämlich mit dem bereits beschriebenen Fortsatz 44 und der ebenfalls bereits beschriebenen Ausnehmung 47. Es ist zu erkennen, daß die Hauptausdehnungsrichtung dieser beiden Befestigungselemente parallel zueinander verläuft.

Die Rückwand 4 weist auf ihrer dem Gehäusemantel 2 zugekehrten Seite einen Hohlraum 55 auf, der als Verlängerung des Hohlraums des Gehäusemantels 2 ausgebildet ist und auf seinen seitlichen Begrenzungswänden Nuten 56 und Rippen 57 aufweist, die mit den Nuten 38 und den dazwischenliegenden Rippen des Geräteträgers 11 fluchten. In den Seitenwänden besitzt die Rückwand 4 weiterhin Schraubkanäle 58, die mit den Schraubkanälen 29 im Gehäusemantel 2 fluchten. Eine Schraubfläche 59 mit Gewindebohrungen 60 dient zur Befestigung elektronischer Bauteile, beispielsweise eines Netzgerätes.

Die Rückwand 4 besitzt auf ihrer dem Gehäusemantel 2 abgekehrten Seite eine Verschlußwand 61, die in Bezug auf die in Figur 8 dargestellte vertikale Schnittebene V-förmig abgewinkelt ausgebildet ist, wobei der Öffnungswinkel des "V" 90 Grad beträgt und die Schenkel 62 und 63 unter einem spitzen Winkel zur Gehäuseachse A-A verlaufen.

Dadurch wird in der Rückwand 4 eine rückseitige prismatische Ausnehmung 64 gebildet, und in dem Wandelement, das den oberen Schenkel 62 des "V" bildet, sind Öffnungen 65 angeordnet, von denen in Figur 8 nur die mittlere im Schnitt dargestellt ist. Diese Öffnungen dienen zum Einsetzen elektrischer Anschlußelemente wie beispielsweise einer in den Figuren 1 und 14 dargestellten Stopfbuchsverschraubung 23.

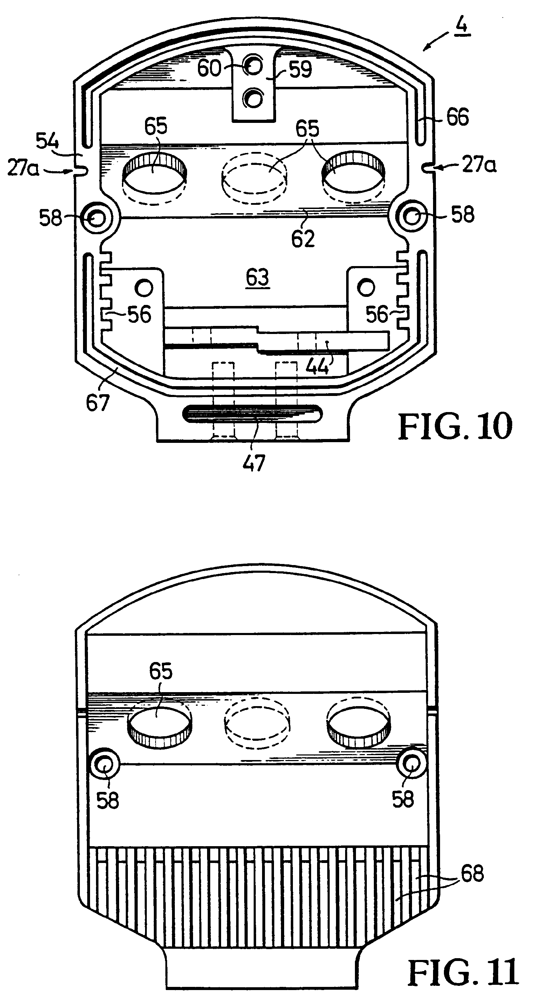

Aus den Figuren 10 und 11 ist zu ersehen, daß die Umrißlinie der Rückwand 4, in axialer Projektionsrichtung gesehen, mit dem Umriß des Gehäusemantels sehr weitgehend übereinstimmt, so daß in den Außenflächen keine Sprünge oder Stufen gebildet werden. In der Stirnseite 54 befinden sich auf dem Umfang Teilabschnitte 66 und 67 einer in der Nähe des äußeren Randes verlaufenden parallelwandigen Nut, die zum Einsetzen eines Dichtungsringes dienen, deren Querschnitt auf dem größten Teil des Umfanges T-förmig ausgebildet ist. Der Steg dieses "T" ist lediglich an den Stellen nicht vorhanden, an denen sich die Nuten 27a für die Halterung des Schutzdaches 5 und die Schraubkanäle 58 befinden. Der Dichtungsring ist der Einfachheit halber nicht dargestellt. Aus den Figuren 8 und 11 ist noch ersichtlich, daß der untere Teil der Rückwand 4 mit vertikalen Rippen 68 versehen ist.

In Figur 12 ist eine Geräte-Trägerplatte 39 dargestellt, die als planparallele Platte ausgeführt ist und entlang ihrer längsten Mittenachse ein Langloch 69 aufweist.

Dieses dient zum Hindurchführen einer Befestigungsschraube für das optische Gerät. Die Trägerplatte besitzt eine Verdrehsicherung 70.

Eine analoge Ausbildung einer Geräte-Trägerplatte 40 ist in Figur 13 im Schnitt dargestellt. Diese ist in ihrem mittleren Bereich unter Bildung zweier paralleler Seitenwände 71 gekröpft ausgebildet und besitzt an den freien Längskanten dieser Seitenwände zwei entgegengesetzt nach außen weisende Führungsrippen 72, die in gegenüberliegenden Nuten 38 des Geräteträger 11 einschiebbar sind. Auch in dieser Trägerplatte ist ein Langloch 69 analog Figur 12 vorgesehen. Eine Verdrehsicherung 73 ist in diesem Falle als Anschlagwinkel ausgebildet.

Die Figur 14 stimmt sehr weitgehend mit dem oberen Teil der Figur 1 überein, allerdings ist anhand dicker Linien eine Bestückungsmöglichkeit für den Innenraum des Schutzgehäuses 1 dargestellt. Auf einer ersten Geräte-Trägerplatte, die in den Geräteträger 11 eingeschoben ist, befindet sich beispielhaft eine Video-Kamera 74, die mit einem Weitwinkel-Objektiv 75 ausgestattet ist. Auf einer zweiten Geräte-Trägerplatte, die in einer höheren "Etage" in den Geräteträger 11 eingeschoben ist, befindet sich beispielhaft ein Netzteil 76. Ein weiteres Netzteil 77 ist auf der Schraubfläche 59 der Rückwand 4 befestigt. Es ist ersichtlich, daß die optische Achse der Video-Kamera 74 und des Objektives 75 mit der Mittenachse A-A des Schutzgehäuses übereinstimmen.

Figur 14 zeigt noch einen Schnitt durch die Frontwand 3, in der das bereits beschriebene Gehäusefenster 26 angeordnet ist. In ihrem oberen Bereich besitzt die Frontwand 3 einen nach vorn vorgezogenen Fortsatz 79, der unter anderem als Blende dient. Der Verlauf ist demjenigen der Vorderkante 5a des Schutzdaches 5 geometrisch ähnlich.

Auch die Frontwand 3 besitzt eine ebene Stirnseite 78, deren Ausbildung sehr weitgehend mit derjenigen der Stirnseite 54 der Rückwand 4 übereinstimmt. Einzelheiten sind Figur 15 zu entnehmen, die eine Draufsicht auf die Innenseite der Frontwand 3 zeigt. Auch hier sind in der Nähe des äußeren Randes der Stirnseite 78 Teilabschnitte 66a und 67a einer auf dem Umfange nahezu geschlossenen Nut für das Einsetzen eines elastomeren Dichtungsringes angeordnet. Auch hier besitzt dieser Dichtungsring einen Steg, der nur im Bereich der Nuten 27b für das Einschieben des Schutzdaches 5 sowie im Bereich der Schraubkanäle 58a unterbrochen ist. Das Gehäusefenster 26 befindet sich in einem mit der Frontwand 3 einteilig ausgebildeten Rahmen 80.

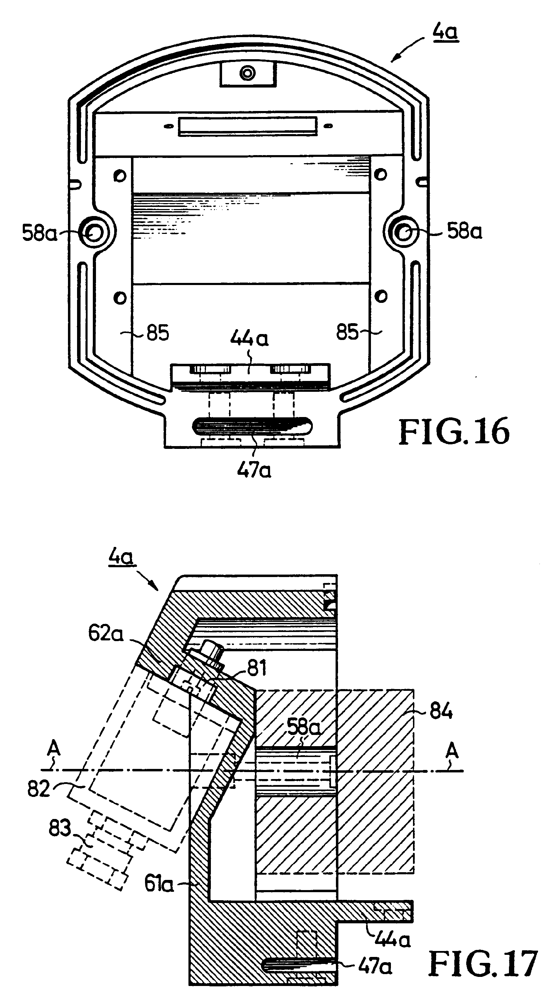

Die Figuren 16 und 17 zeigen eine Variante einer Rückwand 4a, die hinsichtlich ihrer Anschlußmaße mit denjenigen der Rückwand 4 nach den Figuren 8 bis 11 übereinstimmt, so daß auf Wiederholungen verzichtet werden kann. Ein Fortsatz 44a für die starre Befestigung des Geräteträgers 11 und eine Ausnehmung 47a für den Einsatz des Gehäuseträgers 9 sind in analoger Weise vorhanden. Im vorliegenden Fall ist jedoch in dem oberen Schenkel 62a der Verschlußwand 61a eine Steckerleiste 81 angeordnet, die mit einer Steckkupplung 82 zusammenwirkt, die ihrerseits wiederum mit einer Stopfbuchsverschraubung 83 versehen ist. Dadurch wird ein lösbarer Anschluß geschaffen, der jedoch in analoger Weise wie bei dem Gegenstand von Figur 1 durch ein hier nicht dargestelltes Deckelteil nach außen abgedeckt ist. Auch in diesem Fall sind analoge Schraubkanäle 58a vorhanden. Für die Befestigung eines nur angedeuteten Netzteils 84 dienen Schraubflächen 85 gemäß Figur 16.

Aus der Gesamtdarstellung, insbesondere aus den Figuren 1 und 14 ist ersichtlich, daß man die Geräte-Trägerplatten mit den bereits montierten optischen und elektrischen Geräten bequem und in der gewünschten Höhenlage von vorn in den Geräteträger 11 einschieben kann, sobald der Gehäusemantel 2 von der Rückwand 4 getrennt ist, aus dem parallelwandigen Spalt zwischen Geräteträger 11 und Gehäuseträger 9 nach vorn in Richtung der Achse A-A herausgezogen worden ist. Der Gehäusemantel wird alsdann mit der Frontwand 3 um die Fangelemente 48 nach unten herumgeschwenkt, an denen er alsdann hängt. Zweckmäßig wird dabei das Schutzdach 5 entfernt oder zumindest soweit gegenüber dem Gehäusemantel 2 verschoben, daß die Hinterkante 5b des Schutzdachs 5 bei der Montage nicht stört. Da hierbei die starre Anordnung von Rückwand 4, Gehäuseträger 9 und Geräteträger 11 fest von dem Lager 12 gehalten wird, kann ein einziger Monteur sowohl die Bestückung als auch die Verdrahtung problemlos und gefahrlos ausführen.

Es versteht sich, daß bei besonders schweren Objektiven auch das Objektiv eine eigene Geräte-Trägerplatte erhalten kann, die dann wiederum in einer unterschiedlichen Höhenlage montiert werden kann. Geräteträger und Gehäuseträger haben dabei eine Länge, die im wesentlichen der Länge des Gehäusemantels entspricht.

## Patentansprüche

1. Schutzgehäuse (1) für optische Geräte, insbesondere Wetterschutzgehäuse für Video-Kameras von Überwachungsanlagen, mit einem rohrförmigen Gehäusemantel (2), mit je einer an dessen jeweiligem Ende abgedichtet angesetzten Frontwand (3) und Rückwand (4), mit einem innerhalb des Gehäusemantels angeordneten, mit der Rückwand starr verbundenen Geräteträger (11) und einem außerhalb des Gehäusemantels an dessen Unterseite befindlichen Gehäuseträger (9) für die Befestigung des Schutzgehäuses (1) auf einem ortsfesten Lager (12), wobei die elektrischen Anschlüsse durch die Rückwand (4) hindurchgeführt sind und der Gehäusemantel von der Rückwand (4) und dem Geräteträger (11) abziehbar ist, **dadurch gekennzeichnet**, daß der Geräteträger (11) im Querschnitt als U-förmiger, nach oben offener Trog mit zwei parallelen Seitenwänden (36) und einem die Seitenwände verbindenden Joch (37) ausgebildet ist und daß die Seitenwände auf ihren Innenflächen mit jeweils mehreren, zur Gehäuseachse parallelen Nuten (38) zum Einschieben mindestens einer Geräte-Trägerplatte (39, 40) in wählbaren Höhenlagen versehen ist.

2. Schutzgehäuse nach Anspruch 1, **dadurch gekennzeichnet**, daß der Gehäusemantel (2) an seiner Unterseite (10) mit zwei L-förmigen Längsrippen (33) versehen ist, deren freie Schenkel aufeinander zu gerichtet sind und den Gehäuseträger (9) an seinen langen, parallelen Seitenkanten (34) unter Bildung schwalbenschwanzförmiger Führungen (35) umgreifen.

3. Schutzgehäuse nach Anspruch 1, **dadurch gekennzeichnet**, daß am äußeren Ende der Seitenkanten (34) des Gehäuseträgers (9) bzw. den Führungen (35) erste Fangelemente (48) angeordnet sind, gegen die am hinteren Ende des Gehäusemantels (2) befindliche zweite, komplementäre Fangelemente zum Anschlag bringbar sind, die ein weiteres Herausziehen des Gehäusemantels (2) verhindern und als Gelenkverbindung für ein Abwärtsschwenken des vollständig herausgezogenen Gehäusemantels ausgebildet sind.

4. Schutzgehäuse nach Anspruch 1, **dadurch gekennzeichnet**, daß im Gehäuseträger (9) mindestens ein nach oben gegenüber dem Gehäusemantel (2) offener Längskanal (50) für die nach außen hin verdeckte Unterbringung von Leitungen angeordnet ist.

5. Schutzgehäuse nach Anspruch 4, **dadurch gekennzeichnet**, daß beiderseits eines mittig im Gehäuseträger (9) befindlichen Längsschlitzes (16) je ein Längskanal (50) angeordnet ist.

6. Schutzgehäuse nach Anspruch 4, **dadurch gekennzeichnet**, daß der mindestens eine Längskanal (50) mindestens eine nach unten gerichtete Öffnung (51, 52) für das Durchführen von Leitungen aufweist.

7. Schutzgehäuse nach Anspruch 1, **dadurch gekennzeichnet**, daß die Geräte-Trägerplatte (39) entlang ihrer längsten Mittenachse ein Langloch (69) zum Hindurchführen einer Befestigungschraube für das optische Gerät aufweist.

8. Schutzgehäuse nach Anspruch 1, **dadurch gekennzeichnet**, daß die Geräte-Trägerplatte (40) in ihrem mittleren Bereich unter Bildung zweier paralleler Seitenwände (71) gekröpft ausgebildet ist und an den freien Längskanten der Seitenwände zwei entgegengesetzt nach außen weisende Führungsrippen (72) aufweist, die in gegenüberliegenden Nuten (38) des Geräteträgers (11) einschiebbar sind.

9. Schutzgehäuse nach Anspruch 1, **dadurch gekennzeichnet**, daß die Geräte-Trägerplatte (39, 40) eine Verdrehsicherung (70, 73) für das Gerät aufweist.

10. Schutzgehäuse nach Anspruch 1, **dadurch gekennzeichnet**, daß der Geräteträger (11) im Bereich seines Jochs (37) eine nach oben offene Einschubführung (41) aufweist, die mindestens für den Einschub einer Trägerplatte (24) eines Heizkörpers (25) für die Beheizung eines Gehäusefensters (26) vorgesehen ist.

11. Schutzgehäuse nach Anspruch 1, **dadurch gekennzeichnet**, daß die Rückwand (4) als Gußteil ausgebildet ist und auf ihrer dem Gehäusemantel (2) zugekehrten Stirnseite (54) mit Befestigungselementen für den Geräteträger (11) und für den Gehäuseträger (9) versehen ist.

12. Schutzgehäuse nach Anspruch 11, **dadurch gekennzeichnet**, daß die Rückwand (4) auf ihrer dem Gehäusemantel (2) zugekehrten Seite einen Hohlraum (55) aufweist, der als Verlängerung des Hohlraums des Gehäusemantels (2) ausgebildet ist und auf seinen seitlichen Begrenzungswänden Nuten (56) und Rippen (57) aufweist, die mit den Nuten (38) und Rippen des Geräteträgers (11) fluchten.

13. Schutzgehäuse nach Anspruch 11, **dadurch gekennzeichnet**, daß die Rückwand (4) auf ihrer dem Gehäusemantel (2) abgekehrten Seite eine Verschlußwand (61) besitzt, die in einer vertikalen Schnittebene unter Bildung einer nach außen geöffneten prismatischen Ausnehmung (64) V-förmig abgewinkelt ausgebildet ist, wobei der Öffnungswinkel des "V" 90 Grad beträgt und beide Schenkel (62, 63) des "V" unter einem spitzen Winkel zur Gehäuseachse (A-A) verlaufen, und daß in dem den oberen Schenkel (62) des "V" bildenden Wandelement mindestens eine Öffnung (65) für die Einführung bzw. das Einsetzen elektrischer Anschlußelemente angeordnet ist.

14. Schutzgehäuse nach den Ansprüchen 4 und 13, **dadurch gekennzeichnet**, daß auf die Unterseite (19) des hinteren Endes des Gehäuseträgers (9) sowie auf die äußere Unterseite der Rückwand (4) ein in einer senkrechten Schnittebene V-förmig ausgebildetes und in einer hierzu senkrecht stehenden Schnittebene U-förmig geformtes Deckelteil (20) aufgesetzt ist, das mit seinem Hohlraum gegenüber dem Gehäuseträger (9) und der Rückwand (4) einen Kabelkanal (21) bildet.

15. Schutzgehäuse nach Anspruch 1, **dadurch gekennzeichnet**, daß Frontwand (3) und Rückwand (4) als Gußteile ausgebildet sind und im Bereich der Stoßflächen gegenüber dem Gehäusemantel (2) auf einem wesentlichen Teil des Umfangs mit Nuten (66, 67) für den Einsatz des Steges von im Querschnitt T-förmig ausgebildeten Dichtungsringen versehen sind.

16. Schutzgehäuse nach Anspruch 1, **dadurch gekennzeichnet**, daß auch der Gehäuseträger (9) starr mit der Rückwand (4) verbunden ist und seine Länge derjenigen des Gehäusemantels (2) entspricht, derart, daß zwischen Geräteträger (11) und Gehäuseträger (9) ein parallelwandiger Spalt gebildet ist, aus dem der Gehäusemantel (2) mit seiner Unterseite (10) herausziehbar ist.

## Claims

1. A protective housing (1) for optical devices, in particular weather-protection cases for video cameras of monitoring installations, comprising a tubular outer casing (2), at a respective end of the latter a sealed front wall (3) and a rear wall (4), a device support (11) which is within the outer casing rigidly connected to the rear wall, and a housing support (9) positioned outside and below the outer casing for mounting the protective housing (1) on a spatially fixed mount (12), and that the electrical connections are passed through the rear wall (4) and that the outer casing can be pulled off the rear wall (4) and the device support (11), **characterized in that** the device support (11) is designed to be a cross-sectionally U-shaped, upwardly open trough with two parallel side walls (36) and a yoke (37) which connects the side walls, and that the side walls are on their inside surfaces provided with a plurality of grooves parallel to the housing axis (38) for insertion of at least one device support plate (39, 40) at selectable height positions.

2. A protective housing according to claim 1, **characterized in that** the outer casing (2) is at its bottom (10) provided with two L-shaped longitudinal webs (33), the free shanks of which are oriented towards each other and reach around the housing support (9) at its long and parallel side edges (34) whilst forming dove-tail shaped guides (35).

3. A protective housing according to claim 1, **characterized in that** first arresting elements (48) are arranged on the outer end of the side edges (34) of the housing support (9) or the guides (35), which are to be abutted by second complementary arresting elements located at the rear end of the outer casing (2), which prevent the outer casing (2) from being pulled out further and which are designed as a hinge connection for downward pivoting of a fully pulled out outer casing.

4. A protective housing according to claim 1, **characterized in that** in the housing support (9) is accommodated at least one longitudinal channel (50) which is upwardly open relative to the outer casing (2) for the purpose of accommodating cables which are covered towards the outside.

5. A protective housing according to claim 1, **characterized in that** a respective longitudinal channel (50) is arranged on both sides of a longitudinal slot (16) which is positioned centrally in the housing support (9).

6. A protective housing according to claim 4, **characterized in that** the at least one longitudinal channel (50) comprises at least one downwardly oriented opening (51, 52) for passing through cables.

7. A protective housing according to claim 1, **characterized in that** the device support plate (39) comprises an elongated hole (39) along its longest centre axis for the purpose of passing through a mounting bolt for the optical device.

8. A protective housing according to claim 1, **characterized in that** the device support plate (40) is in its central area offset whilst establishing two parallel side walls (71) and comprises at the free longitudinal edges of the side walls two oppositely outwardly oriented guide webs (72) which are insertible into opposite grooves (38) of the device support (11).

9. A protective housing according to claim 1, **characterized in that** the device support plate (39, 40) includes an anti-rotational feature (70, 73) for the device.

10. A protective housing according to claim 1, **characterized in that** the device support (11) has in the area of its yoke (37) an upwardly open insertion guide (41) which is provided at least for insertion of a support plate (24) of a heating element (25) for heating a housing window (26).

11. A protective housing according to claim 1, **characterized in that** the rear wall (4) is a cast element and on its end (54) facing toward the outer casing (2) provided with fixing elements for the device support (11) and for the housing support (9).

12. A protective housing according to claim 11, **characterized in that** the rear wall (4) has on its side facing towards the outer casing (2) a cavity (55) which is designed as an extension of the cavity of the outer casing and which comprises on its lateral defining walls grooves (56) and webs (57) which align with the grooves (38) and webs of the device support (11).

13. A protective housing according to claim 11, **characterized in that** the rear wall (4) has on its side facing away from the outer casing (2) a closure wall (61) which is designed angularly V-shaped in a vertical intersecting plane whilst forming an outwardly open prismatic cutout (64), and that the opening angle of the "V" is 90 degrees and both shanks (62, 63) of the "V" extend at an acute angle to the housing axis (A-A), and that in the upper shank (62) of the wall element which forms the "V" is arranged at least one opening (65) for insertion or fitting of electrical connecting elements.

14. A protective housing according to claims 4 and 13, **characterized in that** both onto the bottom (19) of the rear end of the housing support (9) and onto the outer bottom of the rear wall (4) is seated a cover (20), which is V-shaped in a vertical intersecting plane and U-shaped in a thereto vertical intersecting plane and which together with its cavity establishes a cable channel (21) relative to the housing support (9) and the rear wall (4).

15. A protective housing according to claim 1, **characterized in that** the front wall (3) and the rear wall (4) are cast elements, and that they are in the area of the impact surfaces relative to the outer casing (2) provided on a substantial peripheral portion with grooves (66, 67) for insertion of the web of cross-sectionally T-shaped sealing rings.

16. A protective housing according to claim 1, **characterized in that** the housing support (9) is also rigidly connected to the rear wall (4) and that its length corresponds with that of the outer casing (2) in such a manner that a parallel walled gap is established between device support (11) and housing support (9) from which the outer casing (2) can be pulled with its bottom (10).

## Revendications

1. Boîtier de protection (1) pour des appareils optiques, en particulier boîtier de protection contre les intempéries pour des caméras vidéo d'installations de surveillance, comportant une enveloppe de boîtier tubulaire (2), une paroi frontale (3) et une paroi arrière (4) agencées respectivement de façon étanche à chaque extrémité de l'enveloppe de boîtier, un support d'appareil (11) situé à l'intérieur de l'enveloppe de boîtier et relié rigidement à la paroi arrière, et un support de boîtier (9) situé à l'extérieur de l'enveloppe de boîtier sur sa face inférieure pour la fixation du boîtier de protection (1) sur un organe de montage fixe (12), les raccordements électriques étant menés à travers la paroi arrière (4), et l'enveloppe de boîtier étant détachable de la paroi arrière (4) et du support d'appareil (11), caractérisé en ce que le support d'appareil (11) est réalisé en section transversale sous la forme d'une auge en forme de U ouverte vers le haut, comportant deux parois latérales parallèles (36) et une base (37) reliant les parois latérales, et en ce que les parois latérales sont pourvues sur leurs surfaces intérieures de respectivement plusieurs gorges (38) parallèles à l'axe du boîtier pour l'introduction d'au moins un plateau de support d'appareil (39, 40) dans des positions en hauteur que l'on peut choisir.

2. Boîtier de protection selon la revendication 1, caractérisé en ce que l'enveloppe de boîtier (2) est pourvue sur sa face inférieure (10) de deux nervures longitudinales (33) en forme de L, dont les bras libres sont dirigés l'un vers l'autre et entourent le support de boîtier (9) sur ses longues arêtes latérales parallèles (34) en formant des guidages à queue d'aronde (35).

3. Boîtier de protection selon la revendication 1, caractérisé en ce qu'il est prévu à l'extrémité extérieure des arêtes latérales (34) du support de boîtier (9) ou des guidages (35), des premiers éléments de capture (48) contre lesquels viennent en butée des seconds éléments de capture complémentaires situés à l'extrémité arrière de l'enveloppe de boîtier (2), qui empêchent une poursuite de l'extraction de l'enveloppe de boîtier (2), et qui sont réalisés en tant que liaison articulée pour un basculement vers le bas de l'enveloppe de boîtier entièrement extraite.

4. Boîtier de protection selon la revendication 1, caractérisé en ce qu'il est agencé dans le support de boîtier (9) au moins un canal longitudinal (50) ouvert vers le haut par rapport à l'enveloppe de boîtier (2), pour le logement de lignes avec recouvrement vers l'extérieur.

5. Boîtier de protection selon la revendication 4, caractérisé en ce qu'un canal longitudinal (50) respectif est agencé des deux côtés d'une fente oblongue (16) située au centre du support de boîtier (9).

6. Boîtier de protection selon la revendication 4, caractérisé en ce que ledit au moins un canal longitudinal (50) présente au moins une ouverture dirigée vers le bas (51, 52) pour le passage de lignes.

7. Boîtier de protection selon la revendication 1, caractérisé en ce que le plateau de support d'appareil (39) présente le long de son axe médian le plus long un trou oblong (69) pour le passage d'une vis de fixation pour l'appareil optique.

8. Boîtier de protection selon la revendication 1, caractérisé en ce que le plateau de support d'appareil (40) est réalisé de façon coudée dans sa région médiane en formant deux parois latérales parallèles (71), et présente sur les arêtes longitudinales libres des parois latérales, deux nervures de guidage (72) dirigées en sens opposés vers l'extérieur, qui peuvent être introduites dans des gorges opposées (38) du support d'appareil (11).

9. Boîtier de protection selon la revendication 1, caractérisé en ce que le plateau de support d'appareil (39, 40) présente un blocage anti-rotation (70, 73) pour l'appareil.

10. Boîtier de protection selon la revendication 1, caractérisé en ce que le support d'appareil (11) présente dans la région de sa base (37) un guidage d'introduction (41) ouvert vers le haut, qui est prévu au moins pour l'introduction d'un plateau de support (24) d'un élément chauffant (25) pour le réchauffement d'une fenêtre de boîtier (26).

11. Boîtier de protection selon la revendication 1, caractérisé en ce que la paroi arrière (4) est réalisée en tant que pièce de fonderie, et en ce qu'elle est pourvue, sur sa face frontale (54) orientée vers l'enveloppe de boîtier (2), d'éléments de fixation pour le support d'appareil (11) et pour le support de boîtier (9).

12. Boîtier de protection selon la revendication 11, caractérisé en ce que la paroi arrière (4) présente sur sa face orientée vers l'enveloppe de boîtier (2) une cavité (55) qui est réalisée en tant que prolongement de la cavité de l'enveloppe de boîtier (2) et qui présente sur ses parois de délimitation latérales des gorges (56) et des nervures (57), qui sont en alignement avec les gorges (38) et les nervures du support d'appareil (11).

13. Boîtier de protection selon la revendication 11, caractérisé en ce que la paroi arrière (4) possède sur sa face détournée de l'enveloppe de boîtier (2) une paroi de fermeture (61) qui est réalisée de façon coudée en forme de V dans un plan de coupe vertical en formant un évidement prismatique (64) ouvert vers l'extérieur, l'angle d'ouverture du "V" s'élevant à 90° et les deux bras (62, 63) du "V" s'étendant sous un angle aigu par rapport à l'axe du boîtier (A-A), et en ce que dans l'élément de paroi formant le bras supérieur (62) du "V", il est prévu au moins une ouverture (65) pour l'introduction ou la mise en place d'éléments de raccordement électriques.

14. Boîtier de protection selon les revendications 4 et 13, caractérisé en ce que sur la face inférieure (19) de l'extrémité arrière du support de boîtier (9), ainsi que sur la face inférieure extérieure de la paroi arrière (4), il est posé un élément de couvercle (20) réalisé en forme de V dans un plan de coupe vertical, et en forme de U dans un plan de coupe perpendiculaire à celui-ci, qui forme un canal de câble (21) avec sa cavité par rapport au support de boîtier (9) et à la paroi arrière (4).

15. Boîtier de protection selon la revendication 1, caractérisé en ce que la paroi frontale (3) et la paroi arrière (4) sont réalisées en tant que pièces de fonderie, et en ce qu'elles sont pourvues, dans la région des surfaces de butée par rapport à l'enveloppe de boîtier (2) sur une partie importante de la périphérie, de gorges (66, 67) pour la mise en place de le jambage de bagues d'étanchéité réalisées en section transversale en forme de T.

16. Boîtier de protection selon la revendication 1, caractérisé en ce que le support de boîtier (9) est également relié rigidement à la paroi arrière (4), et sa longueur correspond à celle de l'enveloppe de boîtier (2), de telle sorte qu'il se forme, entre le support d'appareil (11) et le support de boîtier (9), une fente à parois parallèles hors de laquelle peut être extraite l'enveloppe de boîtier (2) par sa face intérieure (10).
